# EUROPEAN PATENT SPECIFICATION

(11) **EP 1 529 393 B1**
(45) Date of publication and mention of the grant of the patent: **18.09.2013**
(21) Application number: 03784824.9
(22) Date of filing: 29.07.2003
(51) Int. Cl.: H04W 36/02

(54) **METHOD AND APPARATUS FOR DETECTING A CELL RESELECTION**
VERFAHREN UND VORRICHTUNG ZUR ERKENNUNG EINER ZELLENNEUAUSWAHL
PROCÉDÉ ET APPAREIL DE DÉTECTION D'UNE RESÉLECTION DE CELLULE

(30) Priority: 09.08.2002 US 402299 P; 24.07.2003 US 626232
(43) Date of publication of application: 11.05.2005
(73) Proprietor: Motorola Mobility LLC, Libertyville, IL 60048 (US)
(72) Inventor: RAVAL, Tushar, Vernon Hills IL 60061 (US); VASUDEVAN, Damodaran, Palatine, IL 60074 (US)
(74) Representative: Openshaw, Paul Malcolm
(86) International application number: PCT/US2003/023453
(87) International publication number: WO 2004/015903

(56) References cited:
- EP-A- 1 059 820
- WO-A-01/47298
- US-A1- 2002 080 758
- US-A1- 2002 191 591
- US-A1- 2003 060 244
- US-A1- 2003 224 772

## Description

### Field of the Invention

The present invention relates generally to cellular communication systems, and, in particular, to cell reselection in a cellular communication system.

### Background of the Invention

The General Packet Radio Service (GPRS) standard provides a compatibility standard for cellular mobile telecommunications systems. The GPRS standard ensures that a mobile station (MS) operating in a GPRS system can obtain communication services when operating in a system manufactured according to the standard. To ensure compatibility, radio system parameters and call processing procedures are specified by the standard, including call processing steps that are executed by an MS and a base station subsystem serving the MS in order to provide or cell reselection.

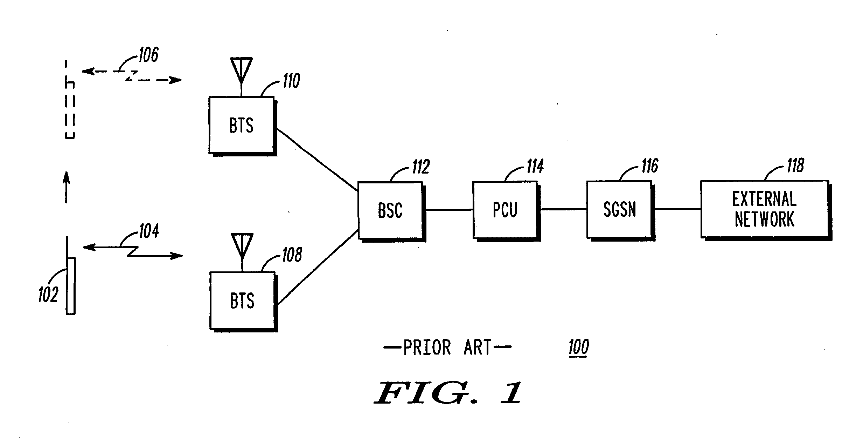

FIG. 1 is a block diagram of an exemplary GPRS communication system 100 of the prior art. Communication system 100 includes multiple base transceiver stations (BTSs) 108, 110 that are each coupled to a base station controller (BSC) 112, which BSC is further coupled to a Packet Control Unit (PCU) 114. PCU 114 is coupled to a Serving GPRS Support Node (SGSN) 116 via a Gb interface 114 that includes a bearer path between PCU 112 and the SGSN and a signaling interface. BTSs 108 and 110, BSC 112, PCU 114, and SGSN 116 are collectively referred to as an infrastructure of communication system 100. Communication system 100 further includes an MS 102 that resides in a first cell and is provided communication services by a BTS 108 serving that cell. Typically, data is transferred between MS 102 and the serving, or source, BTS 108 over an air interface 104 pursuant to a Radio Link Control (RLC). Air interface 104 includes at least one traffic channel and at least one signaling channel.

When MS 102 engages in a communication session with an external network 118, data is conveyed to MS 102 via SGSN 116, PCU 114, BSC 112 and BTS 108. The data is typically included in data packets that are formatted pursuant to an Internet Protocol (IP) standard. When PCU 114 receives data packets intended for MS 102, the PCU stores or discards, the received data in a buffer included in the PCU and associated with MS 102 and BTS 108. PCU 114 then conveys the data to MS 102 by retrieving the stored data packets data from the buffer and conveying the data packets to the MS via BSC 112 and source BTS 108 or asks the SGSN to retransmit the packets that the PCU has discarded.

As MS 102 operates in communication system 100, the MS may experience deterioration in radio frequency (RF) signal conditions or congestion conditions with respect to the communication services provided to the MS by BTS 108. As a result, MS 102 may decide to perform a cell reselection. During cell reselection, the MS decides to abandon the source cell, that is, the cell serviced by BTS 108, and to move to a neighboring, or target, cell, such as a cell serviced by BTS 110. In the current implementation of a GPRS system such as system 100, when MS 102 performs a cell reselection procedure, the MS establishes a wireless communication link 106 with the BTS 110 serving the target cell. Upon establishing communication link 106, MS 102 conveys a Cell Update message to SGSN 116 via target BTS 110. Based upon the Cell Update message, SGSN 116 detects that the MS 102 has initiated a cell reselection and conveys a FLUSH_LL message to the PCU 114.

Upon receiving the FLUSH_LL message, PCU 114 detects that a cell reselection had been initiated and flushes the PCU buffer associated with MS 102 and BTS 108. In addition, in response to receiving the FLUSH_LL message, PCU 114 instructs BTS 108 to cease transmitting data to MS 102 and to terminate allocation of communication resources to MS 102 at the BTS. PCU 114 also acknowledges receipt of the FLUSH_LL message by conveying a FLUSH_LL_ACK message to SGSN 116. Upon receiving the FLUSH_LL_ACK message, SGSN 116 reconveys to PCU 114 any data packets conveyed by the SGSN to PCU 114 but not received by MS 102, that is, any data packets stored in the PCU buffer associated with MS 102 and BTS 108 and deleted pursuant to the FLUSH_LL message or conveyed by PCU 114 to MS 102 but not received by the MS. SGSN 116 can determine the data packets that need to be reconveyed based on Logical Link Control (LLC) acknowledgments received by the SGSN from the MS. PCU 114 then stores the reconveyed data packets in a buffer associated with MS 102 and BTS 110 for subsequent transmission to MS 102 via BTS 110.

In the course of the cell reselection procedure performed by communication system 100, a period of time, typically as long as 60 milliseconds (ms), elapses after MS 102 establishes communication link 106 with target BTS 110 before SGSN 116 detects that MS 102 has performed a cell reselection and so informs PCU 114. In the meanwhile, SGSN 116 continues sending data packets intended for MS 102 to PCU 114, and PCU 114 continues storing received data packets in the buffer associated with MS 102 and BTS 108 and conveying stored data packets to MS 102 via BTS 108. However, upon establishing communication link 106 with BTS 110, MS 102 ceases listening to the traffic channel associated with BTS 108. As a result, MS 102 does not receive the data packets by the PCU to MS 102 via BTS 108 subsequent to the MS establishing communication link 106 with BTS 110. Such data packets must be reconveyed by SGSN 116 to PCU 114, stored by the PCU in a buffer associated with MS 102 and BTS 110, and reconveyed by PCU 114 to MS 102 via BTS 110.

A result of the delay in PCU detection of the cell reselection is wasted system capacity and resources. Due to the delay, SGSN 116 must reconvey to PCU 114 data packets that were conveyed, during the delay, by the SGSN to PCU 114 for conveyance to MS 102 via BTS 108. In addition, during the delay PCU 114 continues to allocate air interface resources to MS 102 at source BTS 108 and continues conveying data packets to the MS 102 via the source BTS after the MS is no longer able to receive data from the source BTS.

Therefore, a need exists for a method and apparatus that reduces the delay of detection, by the infrastructure of communication system 100, of a cell reselection by MS 102, thereby reducing a quantity of data packets that need to be reconveyed by the SGSN to the PCU and permitting a speedier reallocation air interface resources at the source BTS after the MS is no longer able to receive data from the BTS.

EP-A-1 059 820 presents a method for implementing a cell change for a mobile station in a packet-switched cellular radio system comprising a first base station, a second base station and a controlling unit controlling the operation of at least the first base station. The method comprises the steps of establishing at the controlling unit the knowledge about the mobile station's need for performing a cell change from the cell of the first base station to the cell of the second base station while the mobile station is still communicating with the first base station), transmitting from the controlling unit towards the mobile station through the first base station a first message in order to fix an oncoming first moment of time as the moment of performing cell change and from said first moment of time onwards providing access for the mobile station to the cell of the second base station.

### Brief Description of the Drawings

FIG. 1 is a block diagram of a wireless communication system of the prior art.
FIG. 2 is a block diagram of a wireless communication system in accordance with an embodiment of the present invention.
FIG. 3 is a logic flow diagram of steps executed by the communication system of FIG. 2 to transfer data and allocate communication resources during a cell reselection in accordance with an embodiment of the present invention.
FIG. 4 is a logic flow diagram of the steps executed by the communication system of FIG. 2 to transfer data and allocate communication resources during a cell reselection in accordance in accordance with another embodiment of the present invention.

### Detailed Description of the Invention

To address the need for a method and apparatus that reduces the delay of detection, by a wireless infrastructure, of a cell reselection by a mobile station (MS) serviced by the infrastructure, thereby reducing a quantity of data packets that need to be reconveyed by a Serving GPRS Support Node (SGSN) to a Packet Control Unit (PCU) and permitting a speedier reallocation air interface resources at a source base transceiver station (BTS) after the MS is no longer able to receive data from the BTS, a wireless infrastructure is provided that includes a source BTS that provides communication services to a mobile station MS, a target BTS, a PCU in communication with the target BTS, and an SGSN in communication with the PCU. The PCU detects a cell reselection by the MS and initiates a cell reselection procedure in the infrastructure without first receiving a FLUSH_LL message from the SGSN based on messages received by the PCU from the MS via the target BTS and a record of the MS maintained by, or in association with, the PCU.

Generally, an embodiment of the present invention encompasses a method for detecting a cell reselection without an intervention of a Serving GPRS Support Node (SGSN) in a packet data communication system that includes a source base station subsystem (BSS), a target BSS, and a mobile station serviced by the source BSS. The method includes steps of maintaining a record of at least one active mobile station, receiving, from a mobile station of the at least one active mobile station and via the target BSS, a message requesting allocation of a communication channel at the target BSS, and, in response to receipt of the communication channel allocation request, allocating a communication channel at the target BSS to the mobile station. The method further includes steps of informing the mobile station via the target BSS of the allocated communication channel, receiving, by the target BSS from the mobile station, uplink data that includes a mobile station identifier associated with the mobile station, and determining, based on the uplink data and by reference to the record, that the mobile station has initiated a cell reselection.

Another embodiment of the present invention encompasses a method according to claim 5.

Still another embodiment of the present invention encompasses a packet control unit (PCU) that includes a memory device that maintains a record of at least one active mobile station. The PCU further includes a processor operably coupled to the memory device that receives, from a mobile station of at least one active mobile station and via a base station subsystem (BSS) that is a target of a cell reselection, a message requesting allocation of a communication channel at a target BSS, allocates a communication channel at the target BSS to the mobile station, informs the mobile station of the allocated communication channel via the target BSS, receives, from the mobile station and via the target BSS, uplink data that includes a mobile station identifier associated with the mobile station, and determines, based on the uplink data and by reference to the record, that the mobile station has initiated a cell reselection.

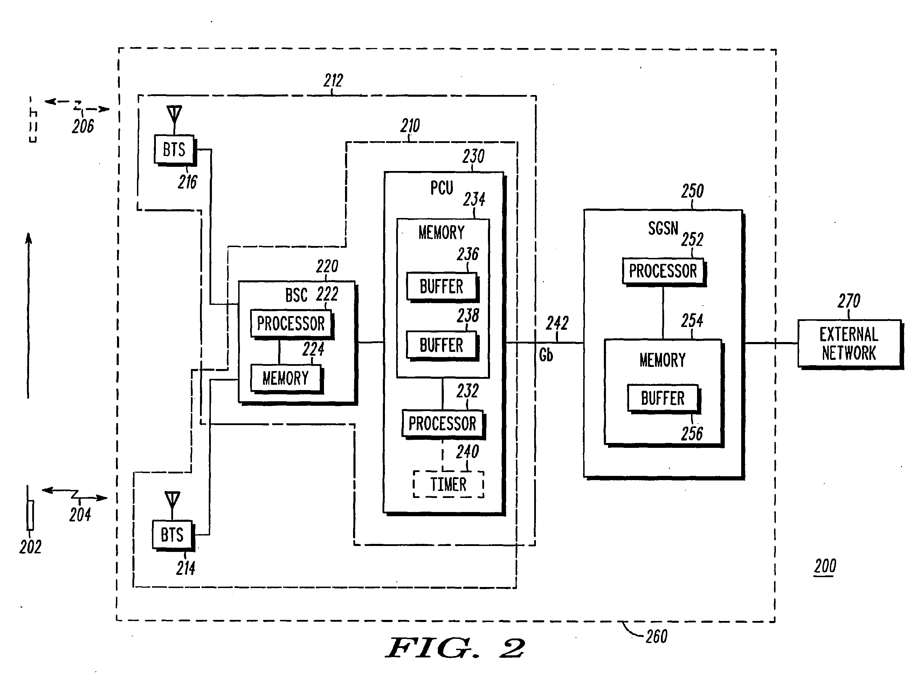

Yet another embodiment of the present invention encompasses a PCU according to claim 11. The present invention may be more fully described with reference to FIGs. 2-4.

FIG. 2 is a block diagram of a wireless communication system 200 in accordance with an embodiment of the present invention. Communication system 200 includes multiple base station subsystems (BSSs) 210, 212 (two shown). Each BSS 210, 212, includes a respective BTS 214, 216 that is operably coupled to a base station controller (BSC) 220, which BSC is in turn operably coupled to a packet control unit (PCU) 230. However, in another embodiment of the present invention, each BTS 214, 216 may be coupled to PCU 230 via a separate BSC. Communication system 200 further includes at least one mobile station (MS) 202 that is provided communication services by a source BSS, that is, BSS 210, that services a source cell in which the MS resides. MS 202 and BSS 210, and in particular BTS 214, communicate via an air interface 204 that includes multiple communication channels, including at least one traffic channel and at least one signaling channel.

Communication system 200 further includes a Serving GPRS Support Node (SGSN) 250 that exchanges signaling messages and bearer traffic with PCU 230 via a Gb interface 242. BSSs 210 and 212 and SGSN 250 are collectively referred to herein as a wireless infrastructure 260. Wireless infrastructure 260, preferably SGSN 250, is operably coupled to an external network 270.

Each of BSC 220, PCU 230, and SGSN 250 includes a respective processor 222, 232, 252 operably coupled to, or associated with, a respective memory device 224, 234, 254. Each of processors 222, 232, and 252 comprises one or more microprocessors, microcontrollers, digital signal processors (DSPs), combinations whereof or such other devices known to those having ordinary skill in the art. Each of memory devices 224, 234, and 254, comprises one or more memory devices such as a random access memory (RAM), a dynamic random access memory (DRAM), and/or a read only memory (ROM) or equivalents thereof, that stores data and programs that may be executed by the corresponding processor.

PCU 230 maintains a record, in memory device 234, of each MS active in communication system 200 and serviced by PCU 230. Preferably, PCU 230 maintains the records of active MS's by storing an MS identifier uniquely associated with each such active MS. PCU 230 further maintains a record, in memory device 234 and in association with each stored MS identifier, of a location corresponding to each active MS, preferably of a BSS servicing the MS. PCU 230 further includes multiple PCU data buffers 236, 238, preferably per_MS buffers, that are each included in memory device 234 or otherwise coupled to processor 232. Each buffer 236, 238 is associated with an individual MS serviced by the PCU, such as MS 202, and a BSS servicing the MS, that is, BSS 210, and stores data packets received by PCU 230 from SGSN 250 and intended for the associated MS via the associated BSS.

SGSN 250 further includes at least one SGSN data buffer 256. SGSN data buffer 256 may reside in SGSN memory device 254 or may be located elsewhere in SGSN 250 and be in communication with processor 252. SGSN data buffer 256 preferably is a per_MS buffer that is associated with an individual MS serviced by the SGSN, such as MS 202, and stores data packets intended for the associated MS. The data packets may be sourced to SGSN 250 from external network 270 or may have a different source, such as an application running in processor 252 of SGSN 250. The source of the data packets stored in buffer 256 is not critical to the present invention.

Communication system 200 comprises a wireless packet data communication system. In order for MS 202 to establish a packet data connection with an external network such as external network 270, each of MS 202, BSSs 210 and 212, and SGSN 250 operates in accordance with the General Packet Radio Service (GPRS) standard. The standard specifies wireless telecommunications system operating protocols, including radio system parameters and call processing procedures. By operating in accordance with the GPRS standard, a user of MS 202 can be assured that MS 202 will be able to communicate with infrastructure 260 and establish a packet data communication link with an external network, such as network 270, via infrastructure 260.

When MS 202 initiates a packet data session, the MS conveys a request for a channel assignment, preferably a Channel Request message, to the BSS servicing the MS, that is, source BSS 210. The channel assignment request is received by BSS 210, and in particular BTS 214, and forwarded to PCU 230. In response receiving the request, PCU 230 assigns to MS 202 one or more communication channels, including a traffic channel, in air interface 204 at BTS 214 and conveys to BTS 214 an Uplink Immediate Assignment (ULIA) message informing of the one or more assigned communication channels. BTS 214 then forwards the ULIA message to MS 202. Channel Request messages and ULIA messages are well known in the art and will not be described in detail herein. Upon receiving the ULIA message from BSS 210, MS 202 conveys a message including uplink data (UL Data) and an MS identifier uniquely associated with the MS, such as a Temporarily Logical Link Identifier (TLLI), to BSS 210, which message is forwarded by the BSS to PCU 230.

When SGSN 250 receives data packets intended for MS 202, the SGSN stores each data packet in a queue in a per_MS buffer associated with MS 202, that is, buffer 256. SGSN 250 then transmits data packets stored in buffer 256 to the source BSS 210, and in particular to PCU 230. When PCU 230 receives a data packet from SGSN 250 that is intended for MS 202, PCU 230 stores the data packet in a queue in a per_MS buffer 236 associated with MS 202 and BSS 210. PCU 230 then conveys the data packets stored in buffer 236 to MS 202 via BTS 214 and the assigned traffic channel in air interface 204.

When MS 202 performs a cell reselection, the MS establishes a communication link with a target BSS, that is, BSS 212, that provides communication services to a target cell and terminates the communication link with source BSS 210. In the prior art, a PCU providing services to the MS continues conveying data packets to the MS via a source BSS until the PCU is informed of the cell reselection by an SGSN. In addition, the source BSS continues to allocate communication resources to the MS until informed of the cell reselection by the SGSN. In the meanwhile, the MS performing the cell reselection may cease listening to a communication link with the source BSS, resulting in data packets that are conveyed to the source BSS and never received by the MS, which data packets must be reconveyed to the target BSS, and a waste of communication resources at the source BSS.

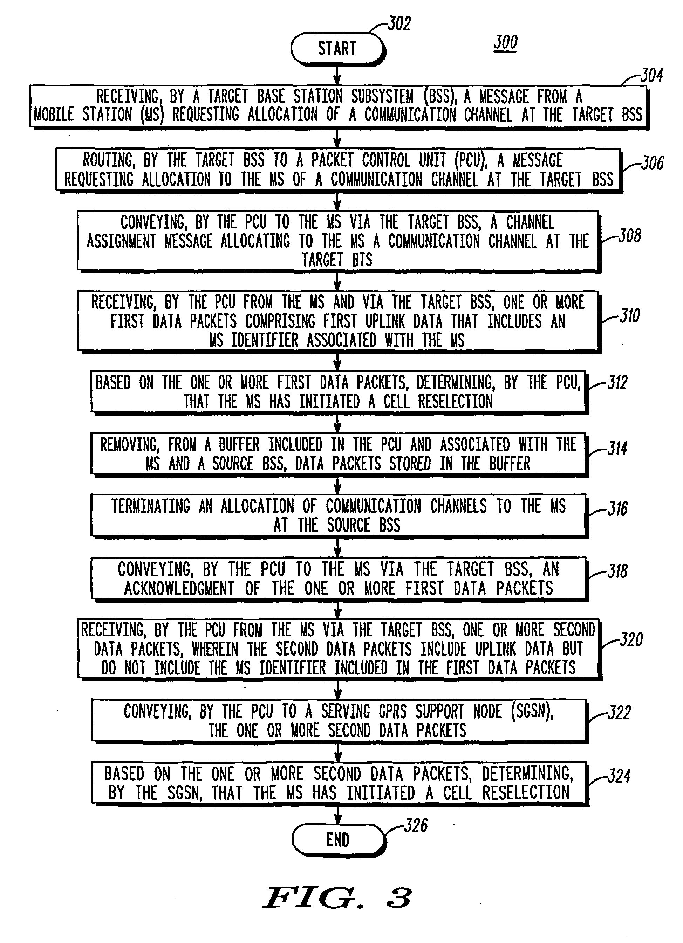

Communication system 200 minimizes the waste of communication resources and system capacity by providing that infrastructure 260, and in particular PCU 230, detect a cell reselection by MS 202 without an intervention by SGSN 250. FIG. 3 is a logic flow diagram 300 of steps performed by communication system 200 in performing a cell reselection in accordance with an embodiment of the present invention. In this embodiment, a "FLUSH_LL" embodiment, communication system 200 is capable of supporting an exchange of FLUSH_LL and FLUSH_LL_ACK messages between PCU 230 and SGSN 250. However, the FLUSH_LL embodiment provides for a deletion or transfer of data packets stored in buffer 236 of PCU 230, and a termination of the allocation of communication resources to MS 202 at source BTS 214, without requiring receipt by the PCU of a FLUSH_LL message.

Logic flow diagram 300 begins (302) when a target BSS, that is, BSS 212, and in particular BTS 216, receives (304) a message from MS 202, preferably a Channel Request message, requesting allocation to the MS of a communication channel at the target BSS. Target BSS 212 routes (306) the message to PCU 230. Upon receiving the channel allocation request, PCU 230 conveys (308) a channel assignment message to MS 202 via the target BSS 212, and in particular via BTS 216. The channel assignment message, preferably an Uplink Immediate Assignment (ULIA) message, includes information concerning a communication channel, including a traffic channel, allocated to MS 202 at target BSS 212 and BTS 216, that is, in air interface 206. Preferably, and unless otherwise specified herein, all steps performed by SGSN 250 as described with respect to logic flow diagrams 300 and 400 are performed by processor 252 of the SGSN, and all steps performed by PCU 230 as described with respect to logic flow diagrams 300 and 400 are performed by processor 232 of the PCU.

Upon receiving the channel assignment message from target BSS 212, MS 202 conveys to target BSS 212 via air interface 206, and the target BSS receives and routes (310) to PCU 230, one or more first data packets comprising uplink data (UL Data) that includes an MS identifier uniquely associated with the MS, preferably a Temporarily Logical Link Identifier (TLLI). Based on the MS identifier included in the one or more first data packets and the routing of the message, and further with reference to memory device 234, PCU 230 determines (312) that MS 202 is serviced by BSS 210 and has initiated a cell reselection. PCU 230 removes (314) the data stored in the buffer 236 associated with MS 202 and source BSS 210 and instructs BSS 210, and in particular BTS 214, to terminate (316) the allocation of one or more communication channels in air interface 204, that is, at BTS 214, to MS 202. Preferably, PCU 230 removes the data stored in buffer 236 by deleting the data packets from the buffer.

In addition, in response to receiving the message including uplink data and the MS identifier uniquely associated with MS 202, PCU 230 conveys (318) an acknowledgment back to the MS via target BSS 212. Preferably, the acknowledgment is a Packet Uplink Acknowledgment (PUAK) that acknowledges receipt of the uplink data and MS identifier included in the message received from the MS. Upon receiving the acknowledgment from PCU 230, MS 202 conveys to target BSS 212, and the target BSS receives (320), one or more second data packets that include uplink data but do not include the MS identifier, that is, the TLLI, included in the first data packets. Target BSS 212 forwards the received second data packets to PCU 230, and PCU 230 forwards (322) the data packets to SGSN 250. Based on the second data packets received from PCU 230, SGSN 250 determines (324) that MS 202 has initiated a cell reselection, and the logic flow ends (326).

By removing data packets stored in the buffer 236 associated with MS 202 and source BSS 210 and instructing the BTS 214 associated with source BTS 210 to terminate the allocation of communication resources to MS 202 at BTS 214, PCU 230 detects a cell reselection and initiates a cell reselection procedure in infrastructure 260 without first receiving a FLUSH_LL message from SGSN 250. By initiating the procedure without first receiving a FLUSH_LL message, PCU 230 transfers data packets to target BTS 216 sooner during a cell reselection, relative to the prior art, and reduces a length of a delay between a time that MS 202 ceases listening to source BTS 214 and a time that MS 202 begins receiving data packets from target BTS 216. In addition, by performing the procedure without first receiving a FLUSH_LL message, air interface resources at the source BTS 214 can be released without first receiving a FLUSH_LL message by PCU 230, thereby freeing up such resources sooner and enhancing system 200 capacity.

In another embodiment of the present invention, a "non-FLUSH_LL" embodiment, communication system 200 does not support FLUSH_LL and FLUSH_LL_ACK messages. In the non-FLUSH_LL embodiment, PCU 230 further includes a timer 240 operably coupled to processor 232. Timer 240 is then used by PCU 230 to determine whether to convey to MS 202, via a target BSS 212, data that may have previously been conveyed to the MS via a source BSS 210.

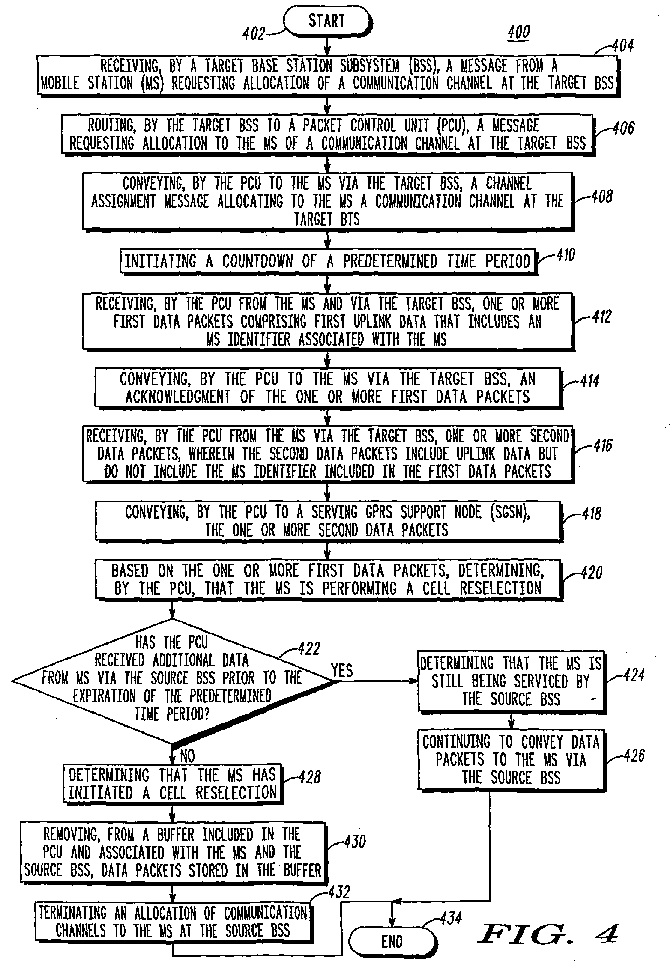

FIG. 4 is a logic flow diagram 400 of steps performed by communication system 200 in transferring data and allocating communication resources during a cell reselection in accordance with the non-FLUSH_LL embodiment of the present invention. Logic flow diagram 400 begins (402) when a target BSS, that is, BSS 212, receives (404) a message from MS 202, preferably a Channel Request message, requesting allocation to the MS of a communication channel at the target BTS. Target BSS 212 routes (406) the message to PCU 230. Upon receiving the channel allocation request from MS 202, PCU 230 conveys (408) a channel assignment message to MS 202 via the target BSS 212 allocating a traffic channel at the target BSS, and in particular at BTS 216, to MS 202. PCU 230 also initiates (410) a count down of a predetermined time period by starting timer 240. The channel assignment message, preferably an Uplink Immediate Assignment (ULIA) message, includes information concerning a communication channel, including a traffic channel, allocated to MS 202 at BTS 216, that is, in air interface 206.

Upon receiving the channel assignment message from target BSS 212, MS 202 conveys to Target BSS 212 via air interface 206, and the target BSS receives and routes (412) to PCU 230, one or more first data packets comprising uplink data (UL Data) that includes an MS identifier uniquely associated with the MS, preferably a Temporarily Logical Link Identifier (TLLI). Upon receiving the first data packets, PCU 230 conveys (414) an acknowledgment back to MS 202 via target BSS 212. Preferably, the acknowledgment is a Final Packet Uplink Acknowledgment (FPUAK) that acknowledges receipt of the uplink data and MS identifier included in the message received from the MS. Upon receiving the acknowledgment from PCU 230, MS 202 conveys to target BSS 212 via air interface 206, and target BSS 212 receives (416), one or more second data packets that include the uplink data but do not include the MS identifier. Target BSS 212 then routes the received second data packets to PCU 230 and the PCU forwards (418) the data packets to SGSN 250.

In addition, based on the MS identifier received by PCU 230 via target BSS 212 and by reference to memory device 234, PCU 230 determines (420) that MS 202 is an active MS that is serviced by source BSS 212 and that the MS is performing a cell reselection. PCU 230 then counts down (422) a predetermined period of time, preferably five (5) seconds, with reference to timer 240. However, those of ordinary skill in the art realize that the length of time utilized for the predetermined time period is up to the designer of system 200 and that other time periods may be utilized for the predetermined period of time without departing form the scope of the present invention. When PCU 230 receives data from MS 202 via air interface 204 and source BSS 210 after starting timer 240 and prior to the expiration of the predetermined period of time, the PCU determines (424) that MS 202 is still being serviced by source BSS 210 and continues conveying (426) data packets to MS 202 via source BSS 210.

When PCU 230 does not 230 receive any further data from MS 202 via air interface 204 and source BSS 210 after starting timer 240 and prior to the expiration of the predetermined period of time, PCU 230 determines (428) that MS 202 has initiated a cell preselection. PCU 203 removes (430) the data stored in the buffer 236 associated with MS 202 and BSS 210 and terminates (432) the allocation of communication resources, that is, communication channels to MS 202 at BSS 208 and BTS 214, that is, terminates the allocation of communication channels to the MS in air interface 204. Logic flow 400 then ends (434). Preferably, PCU 230 removes the data stored in buffer 236 by deleting the data packets from the buffer.

In sum, PCU 230 detects that MS 202 has initiated a cell reselection without first receiving a FLUSH_LL message from SGSN 250. In one embodiment of the present invention, PCU 230 detects the cell reselection based on messages received from MS 202 by target BSS 212 and a record of active MSs maintained by, or in association with, the PCU. In another embodiment of the present invention, PCU 230 detects the cell reselection based on an expiration of a time period during which the PCU receives no further messages from the MS via source BSS 210. By detecting that MS 202 has initiated a cell reselection and initiating a cell reselection procedure in infrastructure 260 without first receiving the FLUSH_LL message, PCU 230 can remove data packets stored in buffer 236 associated with MS 202 and source BSS 210, free up communication resources allocated to MS 202 at source BTS 214, and transfer data packets to target BTS 216 that are destined for MS 202 sooner during a cell reselection relative to the prior art.

While the present invention has been particularly shown and described with reference to particular embodiments thereof, it will be understood by those skilled in the art that various changes may be made and equivalents substituted for elements thereof without departing from the scope of the invention as set forth in the claims below. Accordingly, the specification and figures are to be regarded in an illustrative rather then a restrictive sense, and all such changes and substitutions are intended to be included within the scope of the present invention.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for detecting a cell reselection without an intervention of a Serving GPRS Support Node, SGSN, (250) in a packet data communication system comprising a source base station subsystem, BSS, (210), a target BSS (212), and a mobile station (202) serviced by the source BSS, comprising maintaining a record of at least one active mobile station; and wherein the method comprises:
receiving (304, 306), from a mobile station (202) of the at least one active mobile station and via the target BSS, a message requesting allocation of a communication channel at the target BSS;
in response to receipt of the communication channel allocation request, allocating (308) a communication channel at the target BSS to the mobile station;
informing (308) the mobile station, via the target BSS, of the allocated communication channel;
receiving (310), by the target BSS from the mobile station, uplink data that includes a mobile station identifier associated with the mobile station; and
determining (312), based on the uplink data and by reference to the record, that the mobile station has initiated a cell reselection.

2. The method of claim 1, further comprising a step of, upon determining that the mobile station (202) has initiated a cell reselection, removing data stored in a buffer associated with the mobile station and the source base station subsystem (210).

3. The method of claim 1, wherein the uplink data comprises first uplink data, and wherein the method further comprises steps of:
receiving second uplink data from the mobile station, wherein the second uplink data does not include the mobile station identifier included in the first uplink data; and
routing the second uplink data to a Serving GPRS Support Node (250).

4. The method of claim 3, further comprising a step of determining, by the Serving GPRS Support Node (250) and based on the second uplink data, that the mobile station has initiated a cell reselection.

5. A method for detecting a cell reselection without an intervention of a Serving GPRS Support Node, SGSN, (250) in a packet data communication system comprising a source base station subsystem, BSS, a target BSS, and a mobile station serviced by the source BSS, the method comprising steps of:
maintaining a record of at least one active mobile station and a timer;
receiving (404), from a mobile station of the at least one active mobile station and via the target BSS, a message requesting allocation of a communication channel at the target BSS;
in response to receipt of the communication channel allocation request, allocating (408) a communication channel at the target BSS to the mobile station;
informing (408) the mobile station via the target BSS of the allocated communication channel;
and wherein the method comprises:
initiating (410) a count down of a predetermined time period with reference to the timer;
when no uplink data is received via the source BSS after the initiation of the count down and prior to the expiration of the predetermined time period, determining (428) that the mobile station has performed a cell reselection;
in response to determining that the mobile station has performed a cell reselection, terminating (432), by a packet control unit serving the source BSS, an allocation of channels to the mobile station at the source BSS; and
in response to determining that the mobile station has performed a cell reselection, routing, by the packet control unit serving the source BSS, downlink data intended for the mobile station to the target BSS.

6. The method of claim 5, further comprising a step of, when uplink data is received via the source base station subsystem after the initiation of the count down and prior to the expiration of the predetermined time period, determining that the mobile station is still serviced by the source base station subsystem.

7. The method of claim 5, further comprising a step of, when no uplink data is received via the source BSS after the initiation of the count down and prior to the expiration of the predetermined time period, removing data from a buffer associated with the mobile station and the source BSS.

8. A packet control unit (230) comprising: a memory device (234) that maintains a record of at least one active mobile station; and :
a processor (232) operably coupled to the memory device that receives, from a mobile station of at least one active mobile station and via a base station subsystem, BSS, that is a target of a cell reselection, a message requesting allocation of a communication channel at the target BSS, allocates a communication channel at the target BSS to the mobile station, informs the mobile station of the allocated communication channel via the target BSS, receives, from the mobile station and via the target BSS, uplink data that includes a mobile station identifier associated with the mobile station, and determines, based on the uplink data and by reference to the record, that the mobile station has initiated a cell reselection.

9. The packet control unit of claim 8, further comprising a buffer operably coupled to the processor (232), wherein the buffer is associated with the mobile station and with a source base station subsystem and wherein, upon determining that the mobile station has initiated a cell reselection, the processor removes data stored in the buffer.

10. The packet control unit of claim 9, wherein the buffer associated with the mobile station and with a source base station subsystem comprises a first buffer and wherein the processor removes data from the buffer by transferring the data to a second buffer associated with the mobile station and with the target base station subsystem.

11. A packet control unit (230) comprising: a memory device (234) that maintains a record of at least one active mobile station; and a timer (240) and:
a processor (232) operably coupled to each of the memory device and the timer that receives, from a mobile station of at least one active mobile station and via a base station subsystem (BSS) that is a target of a cell reselection, a message requesting allocation of a communication channel at a target base station subsystem, BSS, allocates a communication channel at the target BSS to the mobile station, informs the mobile station of the allocated communication channel, initiates a count down of a predetermined time period with reference to the timer, when no uplink data is received by the packet control unit via a source base station subsystem, BSS, after the initiation of the count down and prior to the expiration of the predetermined time period, determines that the mobile station has performed a cell reselection and, in response to determining that the mobile station has performed a cell preselection, terminates an allocation of channels to the mobile station at the source BSS and routes downlink data intended for the mobile station to the target BSS.

12. The packet control unit of claim 11, wherein, when uplink data is received via a source base station subsystem after the initiation of the count down and prior to the expiration of the predetermined time period, the processor (232) further determines that the mobile station is still serviced by the source base station subsystem.

13. The packet control unit of claim 11, wherein, when no uplink data is received via the source base station subsystem after the initiation of the count down and prior to the expiration of the predetermined time period, the processor (232) further removes data from a buffer associated with the mobile station and the source base station subsystem.

## Patentansprüche

1. Verfahren zur Erkennung einer Zellenneuauswahl ohne den Eingriff eines Serving GRPS Support Node, SGSN, (250) in einem Paketdaten-Kommunikationssystem, umfassend ein Quellenbasisstations-Subsystem, BSS, (210), eine Ziel- BSS (212) und eine mobile Station (202), die vom Quellen-BSS bedient wird, umfassend die Beibehaltung einer Aufzeichnung von mindestens einer aktiven mobilen Station, und wobei das Verfahren Folgendes umfasst:
Erhalt (304, 306), von einer mobilen Station (202) der mindestens einen aktiven mobilen Station und über das Ziel-BSS, einer Meldung, die die Zuordnung eines Kommunikationskanals am Ziel-BSS anfordert;
in Antwort auf den Erhalt der Anfrage der Zuordnung des Kommunikationskanals Zuordnung (308) eines Kommunikationskanals am Ziel-BSS an die mobile Station;
Information (308) der mobilen Station über das Ziel-BSS über den zugeordneten Kommunikationskanal;
Erhalt (310), durch das Ziel-BSS von der mobilen Station, von Uplink-Daten, die einen Identifizierer der mobilen Station, assoziiert mit der mobilen Station; umfassen; und
Bestimmung (312), basierend auf den Uplink-Dateien und durch Bezug auf die Aufzeichnung, dass die mobile Station eine Zellenneuauswahl initiiert hat.

2. Verfahren nach Anspruch 1, weiter umfassend nach der Bestimmung, dass die mobile Station (202) eine Zellenneuauswahl initiiert hat, einen Schritt des Entfernens von Daten, gespeichert in einem Puffer, der mit der mobilen Station und dem Quellenbasisstations-Subsystem (210) assoziiert ist.

3. Verfahren nach Anspruch 1, wobei die Uplink-Daten erste Uplink-Daten umfassen, und wobei das Verfahren weiter die folgenden Schritte umfasst:
Erhalten von zweiten Uplink-Daten von der mobilen Station, wobei die zweiten Uplink-Daten den Identifizierer der mobilen Station nicht enthalten, der in den ersten Uplink-Daten enthalten ist; und Leiten der zweiten Uplink-Daten an einen Serving GPRS Support Node (250).

4. Verfahren nach Anspruch 3, weiter umfassend einen Schritt des Bestimmens, durch den Serving PRS Support Node (250) und basierend auf den zweiten Uplink-Daten, dass die mobile Station eine Zellenneuauswahl initiiert hat.

5. Verfahren zur Erkennung einer Zellenneuauswahl ohne einen Eingriff eines Serving GRPS Support Node, SGSN, (250) in einem Paketdaten-Kommunikationssystem, umfassend ein Quellenbasisstations-Subsystem, BBS, ein Ziel-BSS und eine mobile Station, die vom Quellen-BSS bedient wird, wobei das Verfahren die folgenden Schritte umfasst:
Beibehalten einer Aufzeichnung von mindestens einer aktiven mobilen Station und eines Zeitgebers;
Erhalten (404), von einer mobilen Station der mindestens einen aktiven mobilen Station und über das Ziel-BSS, einer Meldung, die die Zuordnung eines Kommunikationskanals am Ziel-BSS anfordert;
in Antwort auf den Erhalt der Anfrage der Zuordnung eines Kommunikationskanals, Zuordnen (408) eines Kommunikationskanals am Ziel-BSS an die mobile Station;
Informieren (408) der mobilen Station über das Ziel-BSS über den zugeordneten Kommunikationskanal; und wobei das Verfahren Folgendes umfasst:
Initiierung (410) eines Countdowns eines vorbestimmten Zeitraums mit Bezug auf den Zeitgeber,
wenn keine Uplink-Daten über das Quellen-BSS nach der Initiierung des Countdowns und vor dem Ablauf des vorbestimmten Zeitraums erhalten werden, Bestimmung (428), dass die mobile Station eine Zellenneuauswahl durchgeführt hat,
in Antwort auf die Bestimmung, dass die mobile Station eine Zellenneuauswahl durchgeführt hat, Beendigung (432), durch eine Paketsteuereinheit, die das Quellen-BBS bedient, einer Zuordnung von Kanälen zur mobilen Station am Quellen-BSS; und
in Antwort auf die Bestimmung, dass die mobile Station einen Zellenneuauswahl durchgeführt hat, Leitung, durch die Paketsteuereinheit, die das Quellen-BSS bedient, von Downlink-Daten, die für die mobile Station bestimmt sind, an das Ziel-BSS.

6. Verfahren nach Anspruch 5, weiter umfassend, wenn Uplink-Daten über das Quellenbasisstations-Subsystem nach der Initiierung des Countdowns und vor dem Ablauf des vorbestimmten Zeitraums erhalten werden, einen Schritt des Bestimmens, dass die mobile Station immer noch vom Quellenbasisstations-Subsystem bedient wird.

7. Verfahren nach Anspruch 5, weiter umfassend, wenn keine Uplink-Daten über das Quellen-BSS nach der Initiierung des Countdowns und vor dem Ablauf des vorbestimmten Zeitraums erhalten werden, einen Schritt des Entfernens von Daten von einem Puffer, der mit der mobilen Station und dem Quellen-BSS assoziiert ist.

8. Paketkontrolleinheit (230), umfassend: eine Speichervorrichtung (234), die eine Aufzeichnung von mindestens einer aktiven mobilen Station beibehält; und
einen Prozessor (232), der betriebsbereit mit der Speichervorrichtung gekoppelt ist, die, von einer mobilen Station der mindestens einen aktiven mobilen Station und über ein Basisstations-Subsystem, BSS, das ein Ziel einer Zelleneuauswahl ist, ein Meldung erhält, die die Zuordnung eines Kommunikationskanals an das Ziel-BSS anfordert, einen Kommunikationskanal am Ziel-BSS an die mobile Station zuordnet, die mobile Station über den zugeordneten Kommunikationskanal über das Ziel-BSS informiert, von der mobilen Station und über das Ziel-BSS Uplink-Daten erhält, die einen Identifizierer der mobilen Station umfassen, der mit der mobilen Station assoziiert ist, und basierend auf den Uplink-Dateien und durch Bezug auf die Aufzeichnung bestimmt, dass die mobile Station eine Zellenneuauswahl initiiert hat.

9. Paketkontrolleinheit nach Anspruch 8, weiter umfassend einen Puffer, der betriebsbereit mit dem Prozessor (232) gekoppelt ist, wobei der Puffer mit der mobilen Station und mit einem Quellenbasisstations-Subsystem assoziiert ist, und wobei, bei der Bestimmung, dass die mobile Station eine Zelleneuauswahl initiiert hat, der Prozessor Daten entfernt, die im Puffer gespeichert sind.

10. Paketkontrolleinheit nach Anspruch 9, wobei der Puffer, assoziiert mit der mobilen Station und mit einem Quellenbasisstations-Subsystem, einen ersten Puffer umfasst, und wobei der Prozessor Daten vom Puffer entfernt, in dem die Daten an den zweiten Puffer übertragen werden, der mit der mobilen Station und mit dem Zielbasisstations-Untersystem assoziiert ist.

11. Paketkontrolleinheit (230), umfassend: eine Speichervorrichtung (234), die eine Aufzeichnung von mindestens einer aktiven mobilen Station und eines Zeitgebers (240) beibehält; und
einen Prozessor (232), der betriebsbereit mit jedem der Speichervorrichtung und des Zeitgebers gekoppelt ist, der, von einer mobilen Station von mindestens einer aktiven mobilen Station und über ein Basisstations-Subsystem, BSS, das ein Ziel einer Zellenneuauswahl ist, ein Meldung erhält, die die Zuordnung eines Kommunikationskanals an einem Zielbasisstations-Subsystem, BSS, anfordert, einen Kommunikationskanal am Ziel-BSS an die mobile Station zuordnet, die mobile Station über den zugeordneten Kommunikationskanal informiert, einen Countdown eines vorbestimmten Zeitraums mit Bezug auf den Zeitgeber initiiert, wenn keine Uplink-Daten durch die Paketkontrolleinheit über ein Quellenbasisstations-Subsystem, BSS, nach der Initiierung des Countdowns und vor dem Ablauf des vorbestimmten Zeitraums erhalten werden, bestimmt, dass die mobile Station eine Zellenneuauswahl durchgeführt hat, und in Antwort auf die Bestimmung, dass die mobile Station eine Zelleneuauswahl durchgeführt hat, eine Zuordnung von Kanälen zur mobilen Station am Quellen-BSS beendet und Downlink-Daten, die für die mobile Station beabsichtigt sind, an das Ziel-BSS leitet.

12. Paketkontrolleinheit nach Anspruch 11, wobei, wenn Uplink-Daten über ein Quellenbasisstations-Subsystem nach der Initiierung des Countdowns und vor dem Ablauf des vorbestimmten Zeitraums erhalten werden, der Prozessor weiter (232) bestimmt, dass die mobile Station immer noch vom Quellenbasisstations-Subsystem bedient wird.

13. Paketkontrolleinheit nach Anspruch 11, wobei, wenn keine Uplink-Daten über das Quellenbasisstations-Subsystem nach der Initiierung des Countdowns und vor dem Ablauf des vorbestimmten Zeitraums erhalten werden, der Prozessor (232) weiter Daten von einem Puffer entfernt, der mit der mobilen Station und mit dem Quellenbasisstations-Subsystem assoziiert ist.

## Revendications

1. Procédé pour détecter une resélection de cellule sans intervention d'un noeud de support GPRS de desserte, SGSN, (250) dans un système de communication de données par paquets comprenant un sous-système de station de base, BSS, source (210), un BSS cible (212) et une station mobile (202) desservie par le BSS source, comprenant conserver un enregistrement d'au moins une station mobile active ; et dans lequel le procédé comprend :
recevoir (304, 306), en provenance d'une station mobile (202) de la ou des stations mobiles actives et par l'intermédiaire du BSS cible, un message demandant l'allocation d'un canal de communication au niveau du BSS cible ;
en réponse à la réception de la requête d'allocation de canal de communication, allouer (308) un canal de communication au niveau du BSS cible à la station mobile ;
informer (308) la station mobile, par l'intermédiaire du BSS cible, du canal de communication alloué ;
recevoir (310), par le BSS cible en provenance de la station mobile, des données de liaison montante qui comprennent un identificateur de station mobile associé à la station mobile ; et
déterminer (312), sur la base des données de liaison montante et en référence à l'enregistrement, que la station mobile a initié une resélection de cellule.

2. Procédé selon la revendication 1, comprenant en outre une étape, lors de la détermination du fait que la station mobile (202) a initié une resélection de cellule, de suppression des données stockées dans un tampon associé à la station mobile et au sous-système de station de base source (210).

3. Procédé selon la revendication 1, dans lequel les données de liaison montante comprennent des premières données de liaison montante, et dans lequel le procédé comprend en outre les étapes de :
réception de secondes données de liaison montante en provenance de la station mobile, les secondes données de liaison montante ne comprenant pas l'identificateur de station mobile inclus dans les premières données de liaison montante ; et de routage des secondes données de liaison montante vers un noeud de support GPRS de desserte (250).

4. Procédé selon la revendication 3, comprenant en outre une étape de détermination, par le noeud de support GPRS de desserte (250) et sur la base des secondes données de liaison montante, du fait que la station mobile a initié une resélection de cellule.

5. Procédé pour détecter une resélection de cellule sans intervention d'un noeud de support GPRS de desserte, SGSN, (250) dans un système de communication de données par paquets comprenant un sous-système de station de base, BSS, source, un BSS cible et une station mobile desservie par le BSS source, le procédé comprenant les étapes de :
conservation d'un enregistrement d'au moins une station mobile active et d'un temporisateur ;
réception (404), en provenance d'une station mobile de la ou des stations mobiles actives et par l'intermédiaire du BSS cible, d'un message demandant l'allocation d'un canal de communication au niveau du BSS cible ;
en réponse à la réception de la requête d'allocation de canal de communication, l'allocation (408) d'un canal de communication au niveau du BSS cible vers la station mobile ;
l'information (408) de la station mobile, par l'intermédiaire du BSS cible, du canal de communication alloué ; et le procédé comprenant :
initier (410) un compte à rebours d'une période de temps prédéterminée en référence au temporisateur ;
lorsqu'aucune donnée de liaison montante n'est reçue par l'intermédiaire du BSS source après l'initiation du compte à rebours et avant l'expiration de la période de temps prédéterminée, déterminer (428) que la station mobile a réalisé une resélection de cellule ;
en réponse à la détermination du fait que la station mobile a réalisé une resélection de cellule, terminer (432), par une unité de commande de paquet desservant le BSS source, une allocation de canaux à la station mobile au niveau du BSS source ; et
en réponse à la détermination du fait que la station mobile a réalisé une resélection de cellule, router, par l'unité de commande de paquet desservant le BSS source, des données de liaison descendante destinées à la station mobile vers le BSS cible.

6. Procédé selon la revendication 5, comprenant en outre une étape, lorsque des données de liaison montante sont reçues par l'intermédiaire du sous-système de station de base source après l'initiation du compte à rebours et avant l'expiration de la période de temps prédéterminée, de détermination du fait que la station mobile est toujours desservie par le sous-système de station de base source.

7. Procédé selon la revendication 5, comprenant en outre une étape, lorsqu'aucune donnée de liaison montante n'est reçue par l'intermédiaire du BSS source après l'initiation du compte à rebours et avant l'expiration de la période de temps prédéterminée, de suppression des données d'un tampon associé à la station mobile et au BSS source.

8. Unité de commande de paquet (230) comprenant : un dispositif de mémoire (234) qui conserve un enregistrement d'au moins une station mobile active ; et :
un processeur (232) couplé de manière fonctionnelle au dispositif de mémoire qui reçoit, en provenance d'une station mobile parmi au moins une station mobile active et par l'intermédiaire d'un sous-système de station de base, BSS, qui est une cible d'une resélection de cellule, un message demandant l'allocation d'un canal de communication au niveau du BSS cible, alloue un canal de communication au niveau du BSS cible à la station mobile, informe la station mobile du canal de communication alloué par l'intermédiaire du BSS cible, reçoit, en provenance de la station mobile et par l'intermédiaire du BSS cible, des données de liaison montante qui comprennent un identificateur de station mobile associé à la station mobile, et détermine, sur la base des données de liaison montante et en référence à l'enregistrement, le fait que la station mobile a initié une resélection de cellule.

9. Unité de commande de paquet selon la revendication 8, comprenant en outre un tampon couplé de manière fonctionnelle au processeur (232), dans laquelle le tampon est associé à la station mobile et à un sous-système de station de base source et dans laquelle, lors de la détermination du fait que la station mobile a initié une resélection de cellule, le processeur supprime des données stockées dans le tampon.

10. Unité de commande de paquet selon la revendication 9, dans laquelle le tampon associé à la station mobile et à un sous-système de station de base source comprend un premier tampon et dans laquelle le processeur supprime des données du tampon par transfert des données à un second tampon associé à la station mobile et au sous-système de station de base cible.

11. Unité de commande de paquet (230) comprenant : un dispositif de mémoire (234) qui conserve un enregistrement d'au moins une station mobile active ; et un temporisateur (240) et :
un processeur (232) couplé de manière fonctionnelle à chacun du dispositif de mémoire et du temporisateur, lequel processeur reçoit, en provenance d'une station mobile parmi au moins une station mobile active et par l'intermédiaire d'un sous-système de station de base (BSS) qui est une cible d'une resélection de cellule, un message demandant l'allocation d'un canal de communication au niveau d'un sous-système de station de base, BSS, cible, alloue un canal de communication au niveau du BSS cible à la station mobile, informe la station mobile du canal de communication alloué, initie un compte à rebours d'une période de temps prédéterminée en référence au temporisateur, lorsqu'aucune donnée de liaison montante n'est reçue par l'unité de commande de paquet par l'intermédiaire d'un sous-système de station de base, BSS, source après l'initiation du compte à rebours et avant l'expiration de la période de temps prédéterminée, détermine le fait que la station mobile a réalisé une resélection de cellule et, en réponse à la détermination du fait que la station mobile a réalisé une resélection de cellule, termine une allocation de canaux à la station mobile au niveau du BSS source et route des données de liaison descendante destinées à la station mobile vers le BSS cible.

12. Unité de commande de paquet selon la revendication 11, dans laquelle, lorsque des données de liaison montante sont reçues par l'intermédiaire d'un sous-système de station de base source après l'initiation du compte à rebours et avant l'expiration de la période de temps prédéterminée, le processeur (232) détermine en outre le fait que la station mobile est toujours desservie par le sous-système de station de base source.

13. Unité de commande de paquet selon la revendication 11, dans laquelle, lorsqu'aucune donnée de liaison montante n'est reçue par l'intermédiaire du sous-système de station de base source après l'initiation du compte à rebours et avant l'expiration de la période de temps prédéterminée, le processeur (232) supprime en outre des données d'un tampon associé à la station mobile et au sous-système de station de base source.
